(19) Europäisches Patentamt
European Patent Office
Office européen des brevets

(11) **EP 3 386 816 B1**

(12) **EUROPÄISCHE PATENTSCHRIFT**

(45) Veröffentlichungstag und Bekanntmachung des Hinweises auf die Patenterteilung:
**08.01.2020 Patentblatt 2020/02**

(21) Anmeldenummer: **16793840.6**

(22) Anmeldetag: **07.11.2016**

(51) Int Cl.:
**B60T 13/74** *(2006.01)*

(86) Internationale Anmeldenummer:
**PCT/EP2016/076838**

(87) Internationale Veröffentlichungsnummer:
**WO 2017/097510 (15.06.2017 Gazette 2017/24)**

(54) **VERFAHREN ZUM BETREIBEN EINER BREMSEINRICHTUNG, STEUERUNGSEINRICHTUNG FÜR EINE SOLCHE BREMSEINRICHTUNG, BREMSEINRICHTUNG, UND FAHRZEUG MIT EINER SOLCHEN BREMSEINRICHTUNG**

METHOD TO RUN A BRAKING DEVICE, CONTROL DEVICE FOR SUCH A BRAKING DEVICE, BRAKING DEVICE AND VEHICLE WITH SUCH A BRAKING DEVICE

PROCÉDÉ POUR UTILISER UN DISPOSITIF DE FREINAGE, UNITÉ DE CONTRÔLE POUR UN TEL DISPOSITIF, DISPOSITIF DE FREINAGE ET VÉHICULE AVEC UN TEL DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.12.2015 DE 102015224720**

(43) Veröffentlichungstag der Anmeldung:
**17.10.2018 Patentblatt 2018/42**

(73) Patentinhaber: **Robert Bosch GmbH 70442 Stuttgart (DE)**

(72) Erfinder:
• BAEHRLE-MILLER, Frank
71101 Schoenaich (DE)
• ENGLERT, Andreas
74199 Untergruppenbach (DE)
• PUTZER, Tobias
74177 Bad Friedrichshall (DE)

(56) Entgegenhaltungen:
WO-A1-2009/053429    DE-A1-102012 205 576
US-A1- 2014 345 989

EP 3 386 816 B1

**Beschreibung**

Die Erfindung betrifft ein Verfahren zum Betreiben einer Bremseinrichtung, eine Steuerungseinrichtung für eine solche Bremseinrichtung, eine Bremseinrichtung für ein Fahrzeug, und ein Fahrzeug mit einer solchen Bremseinrichtung.

Stand der Technik

Beispielsweise aus der DE 10 2012 205 576 A1 ist eine Bremseinrichtung mit einem elektromotorischen Aktuator bekannt, der ein Aktuatorelement wahlweise in eine Zuspannstellung oder in eine Freigabestellung verlagern kann. Unter einer Zuspannstellung wird dabei eine Stellung verstanden, in welcher eine auch als Zuspannkraft bezeichnete Klemmkraft zwischen Bremsbelägen, die durch das Aktuatorelement mit einer Kraft beaufschlagt werden, und einer Bremsscheibe eingestellt wird. Hierzu wird üblicherweise eine rotatorische Bewegung des Elektromotors über eine Getriebe-Spindeleinheit in eine translatorische Bewegung des Aktuatorelements gewandelt. Bei jeder Ansteuerung des Elektromotors für einen Zuspannvorgang müssen zunächst zwei Leerwege durchfahren werden, nämlich das zu Beginn stets vorhandene, auch als Lüftspiel bezeichnete Spiel zwischen dem Aktuatorelement und gegebenenfalls einem zu verlagernden Bremskolben, der durch das Aktuatorelement gegen die Bremsscheibe gepresst werden soll, und das Spiel zwischen den Bremsbelägen und der Bremsscheibe. Erst danach erfolgt der Aufbau einer Normalkraft, der sogenannten Zuspannkraft, auf die Bremsscheibe.

Insbesondere durch zukünftig vorgesehene Funktionen wie einem hochautomatisierten Parken, wobei der Fahrer nicht im Fahrzeug sitzt, werden neue Anforderungen an insbesondere als Parkbremseinrichtungen ausgebildete Bremseinrichtungen gestellt. Bei einem Versagen einer hydraulischen Bremsvorrichtung des Fahrzeugs dient dabei die Parkbremseinrichtung als aus Sicherheitsgründen notwendige Rückfallebene. Dabei haben Untersuchungen ergeben, dass zum Erfüllen der sicherheitsbedingten Anforderungen einer Aktuierungszeit von weniger als 200 ms notwendig ist. Um solch kurze Aktuierungszeiten zu ermöglichen, ist es nötig, das Lüftspiel möglichst gering und damit einen Leerweg des Aktuatorelements bis zur Kraftentfaltung möglichst kurz zu halten. Zugleich muss allerdings sichergestellt werden, dass nicht versehentlich bereits eine - wenn gegebenenfalls auch geringe - Kraftentfaltung erfolgt, was den Aufbau einer unerwünschten Bremskraft und gegebenenfalls ein Quietschen der Bremsen beim Einparken des Fahrzeugs zur Folge hätte.

Vorzugsweise ist es möglich, einen von dem Aktuatorelement zurückgelegten Weg insbesondere anhand von Betriebsgrößen des Elektromotors abzuschätzen oder zu berechnen. Hierbei können allerdings Fehler auftreten, welche sich im Ergebnis in einer Abweichung der tatsächlich erreichten Aktuatorelementposition zu der erwarteten Position des Aktuatorelements wiederspiegelt. Soll das Aktuatorelement also eine vorbestimmte Position anfahren, ist es zwar möglich, abzuschätzen oder zu berechnen, ob das Aktuatorelement die vorbestimmte Position erreicht hat, dies kann aber nicht überprüft werden.

Offenbarung der Erfindung

Der Erfindung liegt die Aufgabe zugrunde, ein Verfahren zum Betreiben einer Bremseinrichtung, eine Steuerungseinrichtung für eine solche Bremseinrichtung, eine solche Bremseinrichtung, und ein Fahrzeug mit einer solchen Bremseinrichtung zu schaffen, wobei die genannten Nachteile nicht auftreten.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem ein Verfahren zum Betreiben einer Bremseinrichtung geschaffen wird, wobei ein einen Elektromotor aufweisender Aktuator angesteuert wird, um ein Aktuatorelement in eine vorbestimmte Position zu verlagern, wobei nach Beenden der Ansteuerung des Aktuators wenigstens eine Motorauslaufgröße erfasst wird, und wobei anhand der erfassten Motorauslaufgröße geprüft wird, ob das Aktuatorelement in die vorbestimmte Position verlagert ist. Das Verfahren weist Vorteile im Vergleich zum Stand der Technik auf. Insbesondere ist es im Rahmen des Verfahrens möglich zu prüfen, ob das Aktuatorelement tatsächlich in die vorbestimmte Position verlagert wurde oder in eine hiervon abweichende Fehlerposition gelangt ist. Dies kann in einfacher und ökonomischer Weise durch Erfassen und Auswerten der Motorauslaufgröße geprüft werden, wobei dies bevorzugt eine Größe sein kann, die ohnehin beim Betreiben der Bremseinrichtung - beispielsweise zum Abschätzen oder Berechnen einer Zuspannkraft - erfasst wird, sodass zur Durchführung des Verfahrens keine zusätzliche Sensorik nötig ist. Es bedarf lediglich einer Implementierung des Verfahrens in eine Steuerung der Bremseinrichtung. Im Rahmen des Verfahrens ist es insbesondere möglich, zielsicher das Lüftspiel des Aktuatorelements in gewünschter Weise zu reduzieren und damit insbesondere eine schnelle Aktuierungszeit für die Bremseinrichtung zu gewährleisten. Bevorzugt wird im Rahmen des Verfahrens eine Parkbremseinrichtung, insbesondere ein sogenanntes automatisiertes Parkbremssystem (APB) betrieben. Dieses umfasst vorzugsweise elektromotorische Aktuatoren an Hinterradbremsen eines Fahrzeugs. Dabei ist das Aktuatorelement vorzugsweise in einen Kolben einer Betriebsbremse integriert. Die Klemmkraft einer Hinterachse wird dabei hauptsächlich über eine Gewindespindel aufgebracht, die über eine Gleichstrommotor-Getriebeeinheit angetrieben wird und auf einen Boden des Bremskolbens wirkt. Dabei kann eine hohe Klemmkraft in kurzer Zeit aufgebaut und gehalten werden.

Unter einer vorbestimmten Position wird hier insbesondere eine Lage des Aktuatorelements mit Bezug auf ein durch das Aktuatorelement verlagerbares Bremsenelement, insbesondere einen Bremskolben, verstanden. Dabei handelt es sich bevorzugt nicht um eine absolute Position, sondern um eine Position, die dadurch beschrieben wird, dass entweder - in einem ersten Fall - ein - vorzugsweise reduziertes - Lüftspiel, mithin ein Abstand zwischen dem Aktuatorelement und dem Bremsenelement, existiert, oder in der bereits eine - wenn auch bevorzugt noch geringe - Zuspannkraft oder Klemmkraft aufgebaut ist, wobei kein Lüftspiel mehr existiert. Gemäß einer Ausführungsform des Verfahrens ist die vorbestimmte Position also dadurch charakterisiert, dass das Lüftspiel im Vergleich zu einer Ausgangsposition, aus der heraus das Aktuatorelement verlagert wird, reduziert ist, jedoch größer ist als Null, wobei die vorbestimmte Position bei einer anderen Ausführungsform des Verfahrens dadurch gekennzeichnet ist, dass das Lüftspiel Null ist und bereits eine initiale Zuspannkraft, vorzugsweise kleiner als 2 kN, aufgebaut ist.

Unter einer Motorauslaufgröße wird insbesondere eine Größe verstanden, welche den Lauf des Elektromotors nach Beenden der Ansteuerung charakterisiert. Bevorzugt wird die Motorauslaufgröße zeitabhängig erfasst, wobei insbesondere ein zeitabhängiger Verlauf der Motorauslaufgröße erfasst wird, anhand dessen geprüft wird, ob das Aktuatorelement in die vorbestimmte Position verlagert ist. Da die Motorauslaufgröße den Motorlauf des Elektromotors nach Beenden der Ansteuerung charakterisiert, kann anhand der Motorauslaufgröße und insbesondere anhand deren Verlauf festgestellt werden, ob der Elektromotor - im Falle eines verbleibenden Lüftspiels - frei auslaufen kann, oder ob er - bei Reduzierung des Lüftspiels auf Null und insbesondere bei Aufbau einer Zuspannkraft - der Elektromotor abrupt abgebremst wird.

Gemäß einer Weiterbildung der Erfindung ist vorgesehen, dass die Ansteuerung des Aktuators parameterabhängig beendet wird. Dies hat den Vorteil, dass wenigstens ein Kriterium für die Beendigung der Ansteuerung angewendet werden kann, sodass die vorbestimmte Position bereits mit hoher Sicherheit erreicht wird. Verbleibende Unsicherheiten in Hinblick auf ein Erreichen der vorbestimmten Position können dann im Rahmen des Verfahrens durch die hier vorgeschlagene Prüfung eliminiert werden. Als Parameter für das Beenden der Ansteuerung des Aktuators kann beispielsweise eine seit Beginn der Ansteuerung abgelaufene Zeit, eine Anzahl von Umdrehungen des Elektromotors seit Beginn der Ansteuerung, eine erreichte Motorwinkelgeschwindigkeit, eine elektrische Größe des Elektromotors, beispielsweise ein Motorstrom, ein abgeschätzter Verlagerungsweg und/oder ein berechneter Verlagerungsweg des Aktuatorelements sein. Bevorzugt ist vorgesehen, dass die Ansteuerung des Aktuators, mithin die Ansteuerung des Elektromotors, beendet wird, bevor die vorbestimmte Position erreicht ist, sodass der Elektromotor in die vorbestimmte Position auslaufen kann. Dies erhöht die Sicherheit beim Erreichen der vorbestimmten Position insbesondere dann, wenn das Auslaufverhalten des Elektromotors bekannt ist.

Gemäß einer Weiterbildung der Erfindung ist vorgesehen, dass als Motorauslaufgröße eine Motorwinkelgeschwindigkeit des Elektromotors erfasst wird. In diesem Fall wird die Motorwinkelgeschwindigkeit also insbesondere nach Beenden der Ansteuerung des Aktuators - insbesondere zeitabhängig - erfasst. Dabei kann insbesondere aus dem zeitlichen Verlauf der Motorwinkelgeschwindigkeit darauf geschlossen werden, ob noch ein endliches Lüftspiel in der erreichten Endlage des Aktuatorelements vorhanden ist, oder ob dieses bereits eine Zuspannkraft aufgebaut hat. Insbesondere nimmt in dem erstgenannten Fall die Motorwinkelgeschwindigkeit stetig und vorzugsweise differenzierbar ab, wobei in dem zweiten Fall zumindest eine nichtdifferenzierbare Stelle im Verlauf der Motorwinkelgeschwindigkeit oder sogar eine Unstetigkeit auftritt.

Alternativ oder zusätzlich ist bevorzugt vorgesehen, dass ein Motorstrom durch den Elektromotor als Motorauslaufgröße erfasst wird. Da zum Zeitpunkt der Erfassung der wenigstens einen Motorauslaufgröße die Ansteuerung bereits beendet wird, handelt es sich hierbei nicht um einen Ansteuerstrom, welcher dem Elektromotor von außen aufgeprägt wird, sondern vielmehr um einen Bremsstrom, welchen der Elektromotor selbst erzeugt. Auch der Motorstrom zeigt insbesondere einen charakteristischen, zeitabhängigen Verlauf, je nachdem, ob in der schließlich erreichten Endlage des Aktuatorelements noch ein endliches Lüftspiel vorhanden ist, oder ob dieses bereits eine Klemmkraft aufbaut.

Alternativ oder zusätzlich kann auch eine insbesondere induzierte Motorspannung als Motorauslaufgröße erfasst werden.

Gemäß einer Weiterbildung der Erfindung ist vorgesehen, dass eine zeitliche Entwicklung eines Gradienten der Motorauslaufgröße ausgewertet wird. Dabei wird unter einem Gradienten der Motorauslaufgröße insbesondere ein zeitlicher Gradient, insbesondere eine Ableitung der Motorauslaufgröße nach der Zeit, verstanden. Unter einer zeitlichen Entwicklung des Gradienten wird eine Veränderung eines Werts des Gradienten mit der Zeit verstanden. Besonders bevorzugt wird eine zeitliche Entwicklung eines Betrags des Gradienten ausgewertet. Aus der zeitlichen Entwicklung eines Gradienten der Motorauslaufgröße nach Beenden der Ansteuerung des Aktuators lassen sich in einfacher und sicherer Weise Informationen über die erreichte Position des Aktuatorelements ableiten und insbesondere ermitteln, ob das Aktuatorelement in die vorbestimmte Position verlagert ist.

Gemäß einer Weiterbildung der Erfindung ist vorgesehen, dass ein Lüftspiel des Aktuatorelements erkannt wird, wenn eine stetige Entwicklung des Gradienten beobachtet wird. Dabei wird insbesondere erkannt, dass das Aktuatorelement nach Beenden der Ansteuerung und Auslaufen des Elektromotors noch ein vorhandenes Lüftspiel, insbesondere ein endliches Lüftspiel, aufweist. Da in diesem Fall kein Anschlag des Aktuatorelements an einem weiteren Element erfolgt, tritt keine Unstetigkeit in der Entwicklung des Gradienten auf.

Unter einer stetigen Entwicklung des Gradienten ist hier insbesondere eine stetige Abnahme insbesondere eines Betrags des Gradienten zu verstehen. Sowohl die Motorwinkelgeschwindigkeit als auch der Motorstrom als Motorauslaufgrößen gehen nämlich zum Ende der Verlagerung des Aktuatorelements gegen Null, sodass der Betrag des Gradienten mit der Zeit fällt.

Zusätzlich oder alternativ wird bevorzugt eine Laständerung des Aktuators erkannt, wenn eine unstetige Entwicklung des Gradienten beobachtet wird. Eine Unstetigkeit in der Entwicklung des Gradienten kann eine veränderte Last - insbesondere durch einen Anschlag des Aktuatorelements an einem weiteren Element - anzeigen, insbesondere einen Lastsprung.

Je nachdem, in welche vorbestimmte Position das Aktuatorelement verlagert werden soll, ist es möglich, dass eine stetige Entwicklung des Gradienten erwartet wird, oder dass eine unstetige Entwicklung des Gradienten erwartet wird. Soll in der vorbestimmten Position ein endliches Lüftspiel vorhanden sein, wird eine stetige Entwicklung des Gradienten erwartet. Soll dagegen ein Anschlag des Aktuatorelements an einem weiteren Element, insbesondere unter Aufbau einer gewissen initialen Zuspannkraft, erfolgen, wird eine Laständerung und damit eine unstetige Entwicklung des Gradienten erwartet.

Zusätzlich oder alternativ ist daher vorgesehen, dass bei erwarteter stetiger Entwicklung und beobachteter unstetiger Entwicklung des Gradienten eine zusätzliche Ansteuerung des Aktuators durchgeführt wird. Alternativ oder zusätzlich wird bei erwarteter unstetiger Entwicklung und beobachteter stetiger Entwicklung des Gradienten eine zusätzliche Ansteuerung des Aktuators durchgeführt. In beiden Fällen wird nämlich festgestellt, dass das Aktuatorelement nicht in die vorbestimmte Position verlagert ist. In dem ersten Fall wird ein endliches Lüftspiel in der vorbestimmten Position erwartet, wobei ein Anschlag des Aktuatorelements beobachtet wird; im zweiten Fall wird ein Anschlag und gegebenenfalls die Entwicklung einer gewissen Zuspannkraft erwartet, wobei offenbar ein endliches Lüftspiel verbleibt. Daher erfolgt in beiden Fällen bevorzugt eine zusätzliche Ansteuerung des Aktuators, um mit der zusätzlichen Ansteuerung die vorbestimmte Position zu erreichen.

Das Verfahren kann rekursiv durchgeführt werden, wobei nach Beenden der zusätzlichen Ansteuerung des Aktuators wiederum eine Motorauslaufgröße erfasst und anhand der erfassten Motorauslaufgröße geprüft wird, ob das Aktuatorelement in die vorbestimmte Position verlagert ist. Ist dies dann wiederum nicht der Fall, kann erneut eine zusätzliche Ansteuerung des Aktuators durchgeführt werden. Es ist aber auch möglich, dass die zusätzliche Ansteuerung nur einmal vorgenommen wird, wobei dann davon ausgegangen wird, dass die vorbestimmte Position aufgrund der zusätzlichen Ansteuerung erreicht wird.

Gemäß einer Weiterbildung der Erfindung ist vorgesehen, dass bei erwarteter stetiger Entwicklung und beobachteter unstetiger Entwicklung des Gradienten eine reversierende Ansteuerung des Aktuators erfolgt. Unter einer reversierenden Ansteuerung wird dabei eine Ansteuerung verstanden, die der zuvor zur Verlagerung des Aktuatorelements in die vorbestimmte Position erfolgten Ansteuerung entgegengesetzt ist, wobei die reversierende Ansteuerung insbesondere in Löserichtung des Aktuatorelements, also von der Zuspannstellung weg, erfolgt. Wird also ein Lüftspiel erwartet, jedoch ein Anschlag des Aktuatorelements festgestellt, wird dieses bevorzugt durch reversierende Ansteuerung des Aktuators zurückverlagert, um das Lüftspiel herzustellen.

Alternativ oder zusätzlich wird bei erwarteter unstetiger Entwicklung und beobachteter stetiger Entwicklung des Gradienten eine zu der ursprünglichen Ansteuerung gleichgerichtete Ansteuerung des Aktuators durchgeführt. In diesem Fall wird ein Anschlag und die Entwicklung einer gewissen Zuspannkraft durch das Aktuatorelement erwartet, wobei ein verbleibendes, endliches Lüftspiel beobachtet wird. Daher wird der Aktuator nochmals gleichgerichtet zu der ursprünglichen Ansteuerung angesteuert, sodass das Aktuatorelement weiter in dieselbe Richtung verlagert wird, um mit dem zusätzlichen Ansteuerungsschritt einen Anschlag und/oder den Aufbau einer Zuspannkraft zu bewirken.

Gemäß einer Weiterbildung der Erfindung ist vorgesehen, dass der Elektromotor nach dem Beenden der Ansteuerung in einem Bremsbetrieb betrieben wird. Dies ist vorteilhaft, weil der Elektromotor so in definierter und vorzugsweise berechenbarer oder abschätzbarer Weise abgebremst werden kann, sodass die weitere Verlagerung des Aktuatorelements nach Beenden der Ansteuerung grundsätzlich vorhersagbar ist. In dem Bremsbetrieb erfolgt bevorzugt ein aktives Bremsen des Elektromotors.

Gemäß einer Weiterbildung der Erfindung ist vorgesehen, dass in dem Bremsbetrieb zwei Schaltelemente einer selben Seite von zwei Seiten eines Vierquadrantenstellers geschlossen und zwei Schaltelemente der anderen Seite der zwei Seiten des Vierquadrantenstellers geöffnet sind. Ein Vierquadrantensteller stellt eine übliche Ansteuereinrichtung für einen Elektromotor dar, der auch als H-Brücke bezeichnet wird. Ein solcher Vierquadrantensteller weist eine bezüglich des elektrischen Potentials hochliegende, erste Seite und eine bezüglich des elektrischen Potentials niedrigliegende - insbesondere auf Masse liegende - zweite Seite auf, wobei der Elektromotor zwei Motoranschlüsse aufweist, wobei jeder Motoranschluss über zwei separat ansteuerbare Schaltelemente entweder mit der hochliegenden, ersten Seite oder mit der niedrigliegenden zweiten Seite des Vierquadrantenstellers elektrisch verbunden werden kann. Werden nun die zwei Schaltelemente einer selben Seite, beispielsweise der ersten Seite oder der zweiten Seite, des Vierquadrantenstellers geschlossen, und sind zugleich die zwei Schaltelemente der anderen Seite geöffnet, ergibt sich über die eine Seite mit den geschlossenen Schaltelementen ein Kurzschluss für den Elektromotor, wobei dieser mit seiner restlichen Rotationsenergie einen elektrischen Kurzschlussstrom erzeugt, durch den - beziehungsweise durch die resultierende induzierte Spannung - er aktiv abgebremst wird. Diese Art des Bremsbetriebs stellt somit eine sehr effiziente Möglichkeit dar, den Elektromotor durch entsprechende Ansteuerung der Schaltelemente des Vierquadrantenstellers aktiv zu bremsen.

Die Schaltelemente des Vierquadrantenstellers sind bevorzugt als Transistoren, insbesondere als Feldeffekttransistoren, besonders bevorzugt als MOSFETs ausgebildet.

Die Aufgabe wird auch gelöst, indem eine Steuerungseinrichtung für eine Bremseinrichtung, insbesondere für eine Parkbremseinrichtung, geschaffen wird, die eingerichtet ist zur Durchführung eines Verfahrens nach einer der zuvor beschriebenen Ausführungsformen. In Zusammenhang mit der Steuerungseinrichtung verwirklichen sich insbesondere die Vorteile, die bereits in Zusammenhang mit dem Verfahren erläutert wurden.

Die Steuerungseinrichtung ist insbesondere eingerichtet, um einen Aktuator der Bremseinrichtung anzusteuern und nach Beenden der Ansteuerung des Aktuators eine Motorauslaufgröße zu erfassen, sowie anhand der erfassten Motorauslaufgröße zu prüfen, ob das Aktuatorelement der Bremseinrichtung in eine vorbestimmte Position verlagert ist. Insbesondere ist die Steuerungseinrichtung bevorzugt ausgebildet, um die Ansteuerung des Aktuators parameterabhängig zu beenden, insbesondere abhängig von einer Wegabschätzung und/oder Wegberechnung für den Verlagerungsweg eines Aktuatorelements.

Es ist möglich, dass die Steuerungseinrichtung genau ein Steuergerät aufweist. Es ist aber auch möglich, dass die Funktionalität der Steuerungseinrichtung auf eine Mehrzahl von Steuergeräte aufgeteilt ist, die miteinander wirkverbunden sind.

Die Aufgabe wird auch gelöst, indem eine Bremseinrichtung, insbesondere eine Parkbremseinrichtung, für ein Fahrzeug geschaffen wird, wobei die Bremseinrichtung einen Aktuator aufweist, der seinerseits einen Elektromotor aufweist, wobei eine Steuerungseinrichtung vorgesehen ist, die eingerichtet ist zur Durchführung eines Verfahrens nach einer der zuvor beschriebenen Ausführungsformen. Bevorzugt ist die Steuerungseinrichtung ausgebildet nach einem der zuvor beschriebenen Ausführungsbeispiele. In Zusammenhang mit der Bremseinrichtung verwirklichen sich insbesondere die Vorteile, die bereits in Zusammenhang mit der Steuerungseinrichtung und dem Verfahren erläutert wurden.

Die Bremseinrichtung ist bevorzugt als automatisiertes Parkbremssystem (APB) ausgebildet.

Gemäß einer Weiterbildung der Erfindung ist vorgesehen, dass dem Elektromotor eine Strommesseinrichtung zugeordnet ist, die elektrisch zwischen einem Schalterelement eines Vierquadrantenstellers und einem Motoranschluss des Elektromotors für den Vierquadrantensteller angeordnet ist. Mithilfe der Strommesseinrichtung kann in einfacher Weise der Motorstrom als Motorauslaufgröße erfasst werden. Dass die Strommesseinrichtung elektrisch zwischen einem Schalterelement des Vierquadrantenstellers und einem Motoranschluss für den Elektromotor angeordnet ist, bedeutet, dass diese nicht zwingend räumlich-geometrisch zwischen diesen Elementen angordnet sein muss, was jedoch der Fall sein kann, sondern dass diese elektrisch mit dem Schaltelement und dem Motoranschluss in Reihe geschaltet ist, sodass ein Strom durch das Schaltelement zu dem Motoranschluss über die Strommesseinrichtung fließt.

Vorzugsweise weist die Bremseinrichtung zwei Strommesseinrichtungen auf. In diesem Fall ist eine Redundanz bezüglich der Erfassung des Motorstroms als Motorauslaufgröße gegeben.

Es ist möglich, dass die Strommesseinrichtungen symmetrisch an dem Elektromotor angeordnet sind, wobei insbesondere jedem von zwei Motoranschlüssen eine Strommesseinrichtung zugeordnet ist. Es ist aber auch möglich, dass einem der beiden Motoranschlüsse des Elektromotors beide Strommesseinrichtungen zugeordnet sind, sodass diese miteinander in Reihe zwischen ein und demselben Schaltelement und ein und demselben Motoranschluss angeordnet sind.

Die Aufgabe wird schließlich auch gelöst, indem ein Fahrzeug, insbesondere ein Kraftfahrzeug, mit einer Bremseinrichtung nach einem der zuvor beschriebenen Ausführungsbeispiele geschaffen wird. In Zusammenhang mit dem Fahrzeug ergeben sich insbesondere die Vorteile, die bereits in Zusammenhang mit dem Verfahren, der Steuerungseinrichtung und der Bremseinrichtung erläutert wurden.

Gemäß einer bevorzugten Ausgestaltung ist das Fahrzeug als Kraftfahrzeug, insbesondere als Personenkraftwagen ausgebildet. Es ist aber auch möglich, dass das Fahrzeug als Lastkraftwagen oder Nutzfahrzeug ausgebildet ist.

Gemäß einer bevorzugten Ausgestaltung ist das Fahrzeug eingerichtet zur Durchführung eines hochautomatisierten Parkens, wobei vorgesehen ist, dass der Fahrer beim Parkvorgang nicht in dem Fahrzeug anwesend ist, wobei vielmehr das Fahrzeug selbst eigenständig und unabhängig von dem Fahrer den Parkvorgang durchführt.

Der Steuerungseinrichtung stehen vorzugsweise - insbesondere ausschließlich - abgetastete Signale einer Versorgungsspannung us(t), wie auch des Motorstroms $i_A(t)$ zur Verfügung. Mittels der folgenden Gleichung:

$$\omega(t) = \frac{1}{K_m} \cdot \left[ u_S(t) - R_{ges} \cdot i_A(t) \right] \qquad (1)$$

welche sich aus der elektrischen wie auch der mechanischen Differentialgleichung für das System der Bremseinrichtung ableiten lässt, kann nun durch die abgetasteten Signale des Motorstroms $i_A(t)$, wie auch der Versorgungsspannung us(t) die Winkelgeschwindigkeit $\omega(t)$ des insbesondere als Gleichstrommotor ausgebildeten Elektromotors bestimmt werden. Die Gleichung (1) enthält ebenso die stark von der Temperatur, Alterung, wie auch Fertigungsstreuung abhängigen Parameter der Motorkonstante $K_M$, wie auch des Systemwiderstandes der Bremseinrichtung $R_{ges}$. Die Motorkonstante $K_M$ und der Systemwiderstand $R_{ges}$ können beispielsweise mittels eines Verfahrens ermittelt werden, wie es aus der deutschen Offenlegungsschrift DE 10 2006 052 810 A1, oder aus der deutschen Offenlegungsschrift DE 10 2012 205 576 A1 hervorgeht, wobei insoweit auf diese Dokumente verwiesen wird.

Wird der Elektromotor im Bremsbetrieb betrieben, indem zwei Schalterelemente einer selben Seite eines Vierquadrantenstellers geschlossen und zwei Schalterelemente der anderen Seite des Vierquadrantenstellers geöffnet werden, nimmt der Verlauf des induzierten Stroms in dem Kurzschlusskreis des Vierquadrantenstellers abhängig von den gegebenen Umständen, insbesondere einem vorhandenen oder fehlenden Lastmoment, charakteristische Merkmale an, welche sich durch eine Abtastung und Gradienten-Erkennung des Stromverlaufs detektieren lassen. Zusätzlich oder alternativ ist es auch möglich, statt des Motorstroms die induzierte Motorspannung als Motorauslaufgröße zu erfassen. Im Bremsbetrieb wirkt der Elektromotor als Stromquelle. Es gilt folgende Beziehung:

$$u_M(t) = R_M \cdot i_A(t) + L \cdot \frac{di_A(t)}{dt} + K_M \cdot \omega(t) \qquad (2)$$

wobei $u_M(t)$ die Motorspannung an den Motoranschlüssen des Elektromotors ist, wobei $R_M$ der elektrische Widerstand des Elektromotors ist, und wobei L die Induktivität des Elektromotors ist. Durch die zulässige Annahme einer vernachlässigbar geringen Induktivität

$$L \cdot \frac{di_A(t)}{dt} = 0 \qquad (3)$$

und der Berücksichtigung, dass die Motorspannung $u_M(t)$ an den Motoranschlüssen im Bremsbetrieb zu 0 geht, lässt sich die Differentialgleichung (2) im Bremsbetrieb nach Umstellung nach dem Motorstrom $i_A(t)$ wie folgt darstellen:

$$i_A(t) = -\frac{K_M}{R_M} \cdot \omega(t) \qquad (4)$$

Der fließende Strom ist nun nur noch von den sich in diesem Augenblick nicht verändernden Motorparametern $K_M$ und $R_M$, wie auch von der Winkelgeschwindigkeit $\omega(t)$ abhängig.

Das mechanische Verhalten des Elektromotors kann durch die nachfolgende mechanische Differentialgleichung von Gleichstrommaschinen beschrieben werden:

$$J \cdot \frac{d\omega(t)}{dt} = K_M \cdot i_A(t) - M_R(t) - M_L(t) \qquad (5)$$

Dabei ist J das Trägheitsmoment des Elektromotors, $M_R(t)$ ist das aufgrund der Drehung des Aktuators entstehende Reibmoment, und $M_L(t)$ ist das der Drehung des Elektromotors entgegenwirkende Lastmoment. Läuft der Elektromotor nun ohne ein ihm entgegenwirkendes Lastmoment aus, was einer aktiven Bremsung zur Positionierung des Aktuatorelements mit verbleibendem Restlüftspiel entspricht, so ist aus der mechanischen Differentialgleichung (5) ersichtlich, dass ihm nur das durch seine Drehung entstehende Reibmoment $M_R(t)$ entgegenwirkt. Das Lastmoment $M_L(t)$ wird hierbei gleich 0.

Trifft allerdings das Aktuatorelement nun durch eine gewollte oder ungewollte Ansteuerung auf ein weiteres Element, wobei sich insbesondere ein endlicher Klemmkraftaufbau ergibt, so addiert sich zu dem Reibmoment $M_R(t)$ das nun von 0 verschiedene Lastmoment $M_L(t)$ dazu. Dieses zusätzliche Lastmoment lässt sich nun durch die Abtastung im Bremsbetrieb gemäß Gleichung (4) detektieren.

EP 3 386 816 B1

Die Erfindung wird im Folgenden anhand der Zeichnung näher erläutert. Dabei zeigen:

Figur 1     eine schematische Darstellung eines Ausführungsbeispiels einer Bremseinrichtung eines Fahrzeugs mit integrierter Parkbremsfunktion in vereinfachter Schnittdarstellung;

Figur 2     eine schematische Darstellung einer Verschaltung eines Elektromotors mit einem Vierquadrantensteller im Bremsbetrieb;

Figur 3     eine diagrammatische Darstellung eines Bremsvorgangs der Bremseinrichtung ohne auftretendes Lastmoment;

Figur 4     einen Bremsvorgang der Bremseinrichtung mit eintretendem Lastmoment, und

Figur 5     eine schematische Darstellung einer Ausführungsform eines Verfahrens zum Betreiben einer Bremseinrichtung nach Art eines Flussdiagramms.

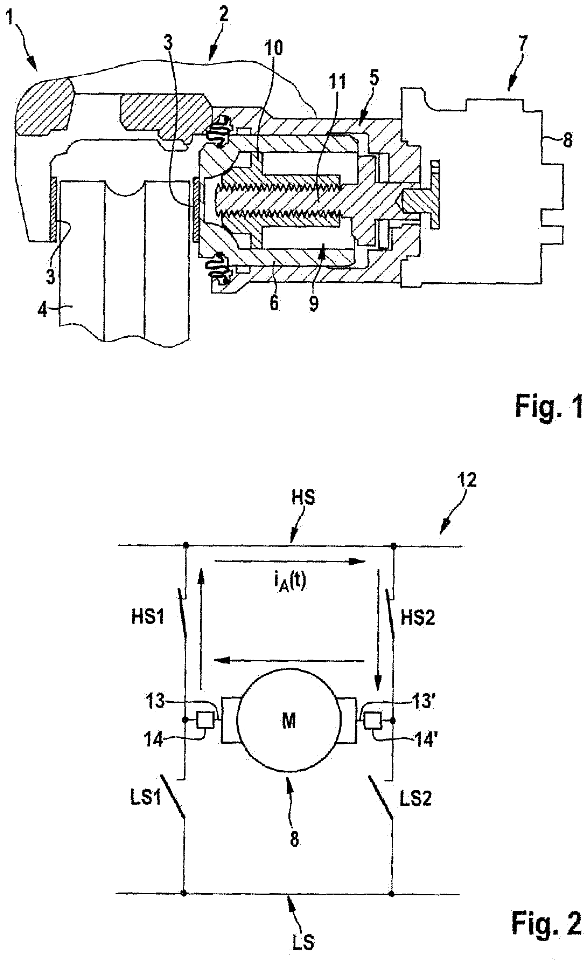

Figur 1 zeigt in einer vereinfachten Schnittdarstellung eine Bremseinrichtung 1 eines hier nicht näher dargestellten Kraftfahrzeugs. Die Bremseinrichtung 1 ist als Scheibenbremse ausgebildet und weist dazu einen Bremssattel 2 auf, der Bremsbeläge 3 trägt, zwischen denen eine mit einem Rad des Kraftfahrzeugs drehfest verbundene Bremsscheibe 4 verklemmbar beziehungsweise einspannbar ist. Dazu ist dem Bremssattel 2 ein hydraulischer Aktuator 5 zugeordnet, der einen Bremskolben 6 aufweist, welcher hydraulisch betätigbar ist, um die Bremsscheibe 4 bei Bedarf zwischen den Bremsbelägen 3 einzuspannen. Hierdurch wird im Fahrbetrieb ein Bremsmoment auf die Bremsscheibe 4 und damit auf die Räder aufgebracht, das dazu dient, das Fahrzeug zu verzögern.

Die Bremseinrichtung 1 ist weiterhin als Parkbremseinrichtung ausgebildet, beziehungsweise weist eine Parkbremsfunktion auf und weist dazu einen elektromotorischen Aktuator 7 auf, der von einem Elektromotor 8, einem Aktuatorgetriebe 9, das vorliegend als Spindelgetriebe ausgebildet ist, und einem Aktuatorelement 10 gebildet wird. Eine Abtriebswelle des Elektromotors 8 ist dabei drehfest mit einer Antriebsspindel 11 des Aktuatorgetriebes 9 verbunden.

Die Antriebsspindel 11 weist ein Außengewinde auf, das mit einem Innengewinde des entlang der Antriebsspindel 11 verfahrbaren Aktuatorelements 10 zusammenwirkt. Durch Ansteuern des Elektromotors 8 wird somit die Antriebsspindel 11 in eine Rotationsbewegung versetzt, um das Aktuatorelement 10 zu verlagern. Dabei ist das Aktuatorelement 10 von einer Freigabestellung in eine Zuspannstellung verlagerbar, in welcher es den Bremskolben 6 gegen die Bremsscheibe 4 drängt und dadurch den Bremssattel 2 zuspannt. Das Aktuatorelement 10 ist dazu koaxial zu dem Bremskolben 6 und innerhalb des Bremskolbens 6 angeordnet. Durch das Aktuatorgetriebe 9 erfolgt eine Wandlung der Rotationsbewegung der Antriebsspindel 11 in eine translatorische Bewegung des Aktuatorelements 10. Insoweit entspricht die Radbremseinrichtung bekannten Radbremseinrichtungen.

Insbesondere bei einem Einsatz der Bremseinrichtung als automatisiertes Parkbremssystem (APB) und ganz besonders beim hochautomatisierten Parken des Kraftfahrzeugs muss eine möglichst kurze Aktuierungszeit, insbesondere von weniger als 200 ms, für die Bremseinrichtung 1 gewährleistet sein. Dies kann insbesondere erreicht werden, indem das Aktuatorelement 10 durch den elektromotorischen Aktuator 7 vor einem eigentlichen Bremsvorgang in einer vorbestimmten Position, insbesondere mit reduziertem Lüftspiel oder mit bereits aufgebauter, initialer Klemmkraftstufe, beispielsweise mit einer Klemmkraft von weniger als 2 kN, angeordnet wird. Dabei ist es möglich, den Aktuator 7 und insbesondere den Elektromotor 8 zu einer Verlagerung des Aktuatorelements 10 anzusteuern, und die Ansteuerung parameterabhängig zu beenden, insbesondere abhängig von einem Abbruchkriterium wie einem Schwellwert, beispielsweise einem Stromschwellwert oder einem Zeitschwellwert, und/oder abhängig von einer Wegabschätzung oder Wegberechnung. Da das System insgesamt selbsthemmend ist, verbleibt es nach Erreichen der Endposition des Aktuatorelements 10 ohne weitere Energiezufuhr in seiner jeweils erreichten Position.

Der Elektromotor 8 wird vorzugsweise nach Beenden der Ansteuerung nicht frei auslaufen gelassen, sondern vielmehr in einem Bremsbetrieb aktiv gebremst.

Figur 2 zeigt eine entsprechende, schematische Darstellung einer Ansteuerung des Elektromotors 8 in dem Bremsbetrieb. Dabei ist hier ein Vierquadrantensteller 12, insbesondere eine H-Brücke, vorgesehen, die eine bezüglich des elektrischen Potentials hochliegende Seite HS (high side) und eine relativ zu der hochliegenden HS vom elektrischen Potential her niedrigliegende Seite LS aufweist. Die niedrigliegende Seite LS (low side) kann insbesondere auf Masse liegen. Der Elektromotor 8 weist zwei Motoranschlüsse 13, 13' auf, die jeweils über ein Schaltelement einerseits mit der hochliegenden Seite HS und andererseits mit der niedrigliegenden Seite LS verbindbar sind. Dabei ist ein erster Motoranschluss 13 mit der hochliegenden Seite über ein erstes Schaltelement HS1 und mit der niedrigliegenden Seite LS über ein zweites Schaltelement LS1 verbunden. Ein zweiter Motoranschluss 13' ist über ein drittes Schaltelement HS2 mit der hochliegenden Seite HS verbunden, und mit einem vierten Schaltelement LS2 mit der niedrigliegenden Seite LS. Die Schaltelemente sind vorzugsweise als Feldeffekttransistoren, insbesondere als MOSFETs ausgebildet. In dem Bremsbetrieb werden - wie in Figur 2 dargestellt - das erste Schaltelement HS1 und das dritte Schaltelement HS2 geschlossen, wobei das zweite Schaltelement LS1 und das vierte Schaltelement LS2 geöffnet sind. Alternativ ist es allerdings auch möglich, dass das zweite Schaltelement LS1 und das vierte Schaltelement LS2 geschlossen werden, wobei das erste Schaltelement HS1 und das dritte Schaltelement HS2 geöffnet sind. Jedenfalls wird auf einer der beiden Seiten HS, LS des Vierquadrantenstellers 2 - in Figur 2 auf der hochliegenden Seite HS - ein Kurzschluss für den Elektromotor 8 erzeugt, wobei der auslaufende Elektromotor 8 als Stromquelle wirkt und den in Figur 2 durch Pfeile schematisch angedeuteten Kurzschlussstrom $i_A(t)$ erzeugt. Durch die auf diese Weise induzierte Spannung wird der Elektromotor 8 aktiv abgebremst.

Während des Motorauslaufs wird wenigstens eine Motorauslaufgröße erfasst, wobei anhand der erfassten Motorauslaufgröße geprüft wird, ob das Aktuatorelement 10 in die vorbestimmte Position verlagert ist.

Es ist möglich, dass als Motorauslaufgröße eine Motorwinkelgeschwindigkeit des Elektromotors 8, eine induzierte Motorspannung, die insbesondere an den Motoranschlüssen 13, 13' abgreifbar ist, und/oder ein Motorstrom durch den Elektromotor 8 erfasst wird/werden. Bei dem in Figur 2 dargestellten Ausführungsbeispiel wird ein Motorstrom redundant durch zwei Strommesseinrichtungen 14, 14' erfasst, wobei eine erste Strommesseinrichtung 14 elektrisch zwischen dem ersten Schaltelement HS1 und dem ersten Motoranschluss 13 angeordnet ist. Die zweite Strommesseinrichtung 14' ist hier elektrisch zwischen dem dritten Schaltelement HS2 und dem zweiten Motoranschluss 13' angeordnet. Mit den beiden Strommesseinrichtungen 14, 14' kann redundant der Strom durch den Elektromotor 8 gemessen werden. Alternativ ist es auch möglich, dass die beiden Strommesseinrichtungen 14, 14' gemeinsam entweder elektrisch dem ersten Motoranschluss 13 zugeordnet sind, sodass sie hier beispielsweise in einer abgewandelten Figur 2 beide an der Position der in Figur 2 dargestellten Strommesseinrichtung 14 angeordnet wären, oder dass sie beide dem zweiten Motoranschluss 13' zugeordnet sind, wobei sie dann beide an der in der Figur 2 dargestellten ersten Position der zweiten Strommesseinrichtung 14' angeordnet wären. Dabei sind die Strommesseinrichtungen 14, 14' bevorzugt in Reihe geschaltet.

Zur Ansteuerung des Aktuators 7, insbesondere auch zum parameterabhängigen Beenden der Ansteuerung, und zum Erfassen und Auswerten der Motorauslaufgröße ist vorzugsweise eine hier nicht dargestellte Steuereinrichtung vorgesehen.

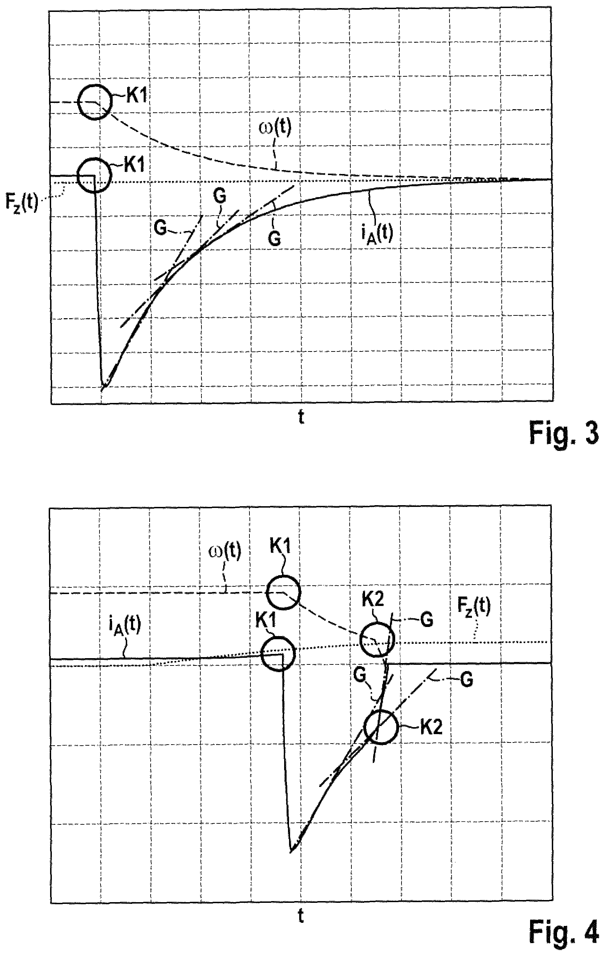

Figur 3 zeigt eine diagrammatische Darstellung eines Bremsvorgangs für den Elektromotor 8 ohne auftretendes Lastmoment. Dabei sind hier gegen die Zeit t aufgetragen: Als durchgezogene Kurve der Motorstrom $i_A(t)$, als gestrichelte Kurve die Motorwinkelgeschwindigkeit $\omega(t)$, und als punktierte Kurve eine auf den Abtrieb des Elektromotors 8 wirkende Zuspannkraft $F_Z(t)$. Mit zwei Kreisen K1 ist hier der Eintritt des Bremsbetriebs angezeigt.

Bei der hier schematisch dargestellten Ausführungsform des Verfahrens zum Betreiben der Bremseinrichtung 1 wird eine zeitliche Entwicklung eines Gradienten, nämlich eines zeitlichen Gradienten, des Motorstroms $i_A(t)$ als Motorauslaufgröße ausgewertet. Dabei sind hier zu verschiedenen Zeiten auftretende Gradienten als strichpunktierte Geraden G an die Kurve des Motorstroms $i_A(t)$ angezeichnet. Es ist ersichtlich, dass ohne auftretendes Lastmoment eine stetige Entwicklung des Gradienten beobachtet wird. Dies bedeutet, dass das Aktuatorelement 10 eine Position erreicht, in der noch ein endliches Lüftspiel vorliegt. Es wird also ein endliches Lüftspiel des Aktuatorelements 10 erkannt, wenn eine stetige Entwicklung des Gradienten G beobachtet wird.

In Figur 4 ist schematisch ein Bremsvorgang mit eintretendem Lastmoment dargestellt. Gleiche und funktionsgleiche Elemente sind mit gleichen Bezugszeichen versehen, sodass insofern auf die vorangegangene Beschreibung verwiesen wird. Dabei startet auch hier wiederum der Bremsbetrieb in dem durch die Kreise K1 gekennzeichneten Zeitpunkt. Zu einem späteren Zeitpunkt, welcher durch Kreise K2 markiert ist, tritt ein erhöhtes Lastmoment, beispielsweise durch einen Anschlag des Aktuatorelements 10 an dem Bremskolben 6 oder durch eine initiale Zuspannkraft auf, wodurch sich in diesem Zeitpunkt ein Sprung bezüglich der Motorwinkelgeschwindigkeit $\omega(t)$ und dem Motorstrom $i_A(t)$ ergibt. Dieser Kraftanstieg kann auch durch eine Kraftanstiegserkennung detektiert werden.

Das nichtdifferenzierbare Abknicken einer Motorauslaufgröße führt hier zu einer unstetigen zeitlichen Entwicklung des Gradienten G, wodurch eine Laständerung erkannt wird.

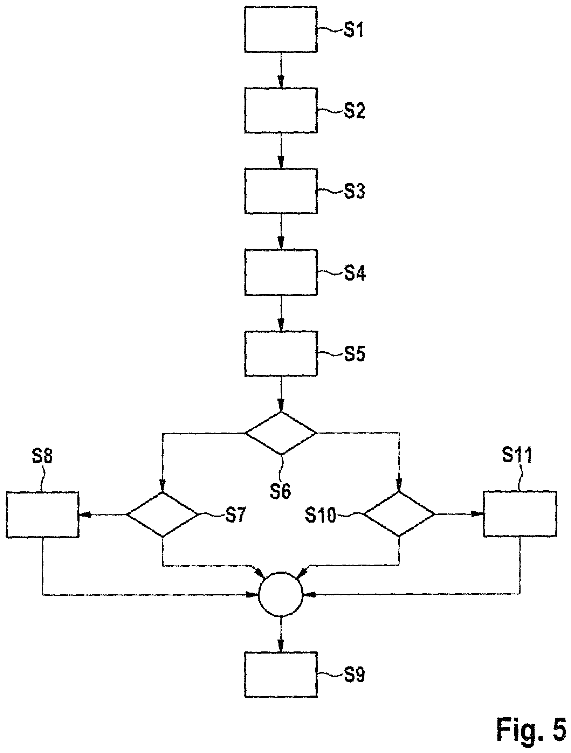

Figur 5 zeigt eine schematische Darstellung einer Ausführungsform des Verfahrens zum Betreiben einer Bremseinrichtung 1. Dabei wird in einem ersten Schritt S1 eine Verlagerung des Aktuatorelements 10 durch Ansteuerung des Aktuators 7 und insbesondere des Elektromotors 8 gestartet, wobei das Aktuatorelement 10 in Richtung einer Zuspannstellung - entweder zur Reduzierung eines Lüftspiels oder zum Aufbau einer initialen Klemmkraft - angesteuert wird. In einem zweiten Schritt S2 wird die Leerlaufdrehzahl des Elektromotors 8 erreicht. In einem dritten Schritt S3 wird eine Wegberechnung für das Aktuatorelement 10 durchgeführt, beispielsweise auf der Grundlage einer Spannungsmessung und/oder der Ermittlung einer Ansteuerzeit. Abhängig von wenigstens einem Parameter wird in einem vierten Schritt S4 eine Ansteuerung des Elektromotors 8 beendet und ein Bremsbetrieb für den Elektromotor 8 gestartet, wobei in dem Bremsbetrieb eine Motorauslaufgröße erfasst wird, anhand derer geprüft wird, ob das Aktuatorelement 10 in die vorbestimmte Position verlagert ist. In einem fünften Schritt S5 erfolgt ein Stillstand des Elektromotors 8.

In einem sechsten Schritt S6 wird die erfasste Motorauslaufgröße ausgewertet und geprüft, ob eine initiale Klemm- oder Zuspannkraft aufgebaut wurde, insbesondere indem geprüft wird, ob ein Gradient der Motorauslaufgröße eine stetige Entwicklung oder eine unstetige Entwicklung gezeigt hat.

Wird eine stetige Entwicklung des Gradienten beobachtet, wird auf ein in der erreichten Endposition des Aktuatorelements 10 noch vorhandenes, endliches Lüftspiel geschlossen. Es wird nun in einem siebten Schritt S7 geprüft, ob die vorbestimmte Position dieses endliche Lüftspiel einschließt, oder ob vielmehr ein initialer Klemmkraftaufbau gewünscht war. War ein initialer Klemmkraftaufbau erwünscht, liegt also eine Situation vor, bei der eine unstetige Entwicklung des Gradienten erwartet wurde, jedoch eine stetige Entwicklung beobachtet wurde, erfolgt in einem achten Schritt S8 eine zusätzliche Ansteuerung des Elektromotors 8, welche zu der ursprünglichen Ansteuerung gleichgerichtet ist, also eine Ansteuerung des Elektromotors 8 in Zuspannrichtung. Es ist dann möglich, dass nach dieser Ansteuerung das Erreichen der vorbestimmten Position vorausgesetzt wird, wobei das Verfahren in einem neunten Schritt S9 endet; es ist aber auch möglich, dass das Verfahren rekursiv durchgeführt wird, wobei nach Beenden der erneuten Ansteuerung wiederum geprüft wird, ob die vorbestimmte Position erreicht ist.

Wird eine unstetige Entwicklung des Gradienten beobachtet und somit ein initialer Zuspannkraftaufbau erkannt, wird in einem zehnten Schritt S10 geprüft, ob dies erwünscht war, oder ob die vorbestimmte Position vielmehr ein endliches Lüftspiel einschließen sollte. War eigentlich ein endliches Lüftspiel erwünscht, wurde also eine stetige Entwicklung des Gradienten erwartet, jedoch eine unstetige Entwicklung beobachtet, erfolgt in einem elften Schritt S11 eine reversierende Ansteuerung des Elektromotors 8, also eine Ansteuerung in Richtung der Freigabestellung. Auch hier ist es wiederum möglich, dass nach der erneuten Ansteuerung in dem elften Schritt S11 das Erreichen der vorbestimmten Position vorausgesetzt wird und das Verfahren in dem neunten Schritt S9 endet. Es ist aber auch möglich, dass das Verfahren - wie bereits zuvor beschrieben - rekursiv durchgeführt wird.

Wird allerdings die jeweils erwartete Gradientenentwicklung in den Schritten S7, S10 beobachtet, wird darauf geschlossen, dass das Aktuatorelement 10 seine vorbestimmte Position erreicht hat, sodass das Verfahren dann unmittelbar ohne Durchlaufen der Schritte S8, S11 in dem neunten Schritt S9 endet.

**Patentansprüche**

1. Verfahren zum Betreiben einer Bremseinrichtung (1), wobei

   - ein einen Elektromotor (8) aufweisender Aktuator (7) angesteuert wird, um ein Aktuatorelement (10) in eine vorbestimmte Position zu verlagern, wobei
   - nach Beenden der Ansteuerung des Aktuators (7) wenigstens eine Motorauslaufgröße erfasst wird, wobei
   - anhand der erfassten Motorauslaufgröße geprüft wird, ob das Aktuatorelement (10) in die vorbestimmte Position verlagert ist.

2. Verfahren nach Anspruch 1, **dadurch gekennzeichnet, dass** die Ansteuerung des Aktuators (7) parameterabhängig beendet wird.

3. Verfahren nach einem der vorhergehenden Ansprüche, **dadurch gekennzeichnet, dass** als Motorauslaufgröße eine Motorwinkelgeschwindigkeit des Elektromotors (8), eine Motorspannung des Elektromotors (8), und/oder ein Motorstrom durch den Elektromotor (8) erfasst wird/werden.

4. Verfahren nach einem der vorhergehenden Ansprüche, **dadurch gekennzeichnet, dass** eine zeitliche Entwicklung eines Gradienten (G) der Motorauslaufgröße ausgewertet wird, wobei vorzugsweise

   a) ein Lüftspiel des Aktuatorelements (10) erkannt wird, wenn eine stetige Entwicklung des Gradienten (G) beobachtet wird, und/oder
   b) eine Laständerung des Aktuators (7) erkannt wird, wenn eine unstetige Entwicklung des Gradienten (G) beobachtet wird, und/oder
   c) bei erwarteter stetiger Entwicklung des Gradienten (G) und beobachteter unstetiger Entwicklung des Gradienten (G), und/oder bei erwarteter unstetiger Entwicklung des Gradienten (G) und beobachteter stetiger Entwicklung des Gradienten (G) eine zusätzliche Ansteuerung des Aktuators (7) durchgeführt wird.

5. Verfahren nach einem der vorhergehenden Ansprüche, **dadurch gekennzeichnet, dass**

   a) bei erwarteter stetiger Entwicklung und beobachteter unstetiger Entwicklung des Gradienten (G) eine reversierende Ansteuerung des Aktuators (7) erfolgt, und/oder dass
   b) bei erwarteter unstetiger Entwicklung und beobachteter stetiger Entwicklung des Gradienten (G) eine zu der ursprünglichen Ansteuerung gleichgerichtete Ansteuerung des Aktuators (7) erfolgt.

**6.** Verfahren nach einem der vorhergehenden Ansprüche, **dadurch gekennzeichnet, dass** der Elektromotor (7) nach Beenden der Ansteuerung in einem Bremsbetrieb betrieben wird, wobei in dem Bremsbetrieb vorzugsweise zwei Schaltelemente (HS1,HS2,LS1,LS2) einer selben Seite von zwei Seiten (HS,LS) eines Vierquadrantenstellers (12) geschlossen und zwei Schaltelemente (HS1,HS2,LS1,LS2) der anderen Seite der zwei Seiten (LS,HS) des Vierquadrantenstellers (12) geöffnet sind.

**7.** Steuerungseinrichtung für eine Bremseinrichtung (1), **dadurch gekennzeichnet, dass** die Steuerungseinrichtung eingerichtet ist zur Durchführung eines Verfahrens nach einem der Ansprüche 1 bis 6.

**8.** Bremseinrichtung (1) für ein Fahrzeug, mit einem einen Elektromotor (8) aufweisenden Aktuator (7), **gekennzeichnet durch** eine Steuerungseinrichtung, die eingerichtet ist zur Durchführung eines Verfahrens nach einem der Ansprüche 1 bis 6, oder **durch** eine Steuerungseinrichtung nach Anspruch 7.

**9.** Bremseinrichtung (1) nach Anspruch 8, **dadurch gekennzeichnet, dass** dem Elektromotor (8) wenigstens eine Strommesseinrichtung (14,14') zugeordnet ist, die elektrisch zwischen einem Schaltelement (HS1,HS2,LS1,LS2) eines Vierquadrantenstellers (12) und einem Motoranschluss (13,13') des Vierquadrantenstellers (12) für den Elektromotor (8) angeordnet ist.

**10.** Fahrzeug, mit einer Bremseinrichtung (1) nach einem der Ansprüche 8 und 9.


**Claims**

**1.** Method for operating a braking mechanism (1), wherein

- an actuator (7) that comprises an electric motor (8) is actuated in order to displace an actuator element (10) into a predetermined position, wherein
- after the procedure of actuating the actuator (7) is terminated at least one motor coasting variable is ascertained, wherein
- with reference to the ascertained motor coasting variable a check is performed as to whether the actuator element (10) has been displaced into the predetermined position.

**2.** Method according to Claim 1, **characterized in that** the procedure of actuating the actuator (7) is terminated in dependence upon parameters.

**3.** Method according to any one of the preceding claims, **characterized in that** a motor angular velocity of the electric motor (8), a motor voltage of the electric motor (8), and/or a motor current through the electric motor (8) is/are ascertained as a motor coasting variable.

**4.** Method according to any one of the preceding claims, **characterized in that** a temporal development of a gradient (G) of the motor coasting variable is evaluated, wherein preferably

a) a clearance of the actuator element (10) is identified if a continuous development of the gradient (G) is observed, and/or
b) a load change of the actuator (7) is identified if a discontinuity in the development of the gradient (G) is observed, and/or
c) in the case of an expected continuous development of the gradient (G) and an observed discontinuity in the development of the gradient (G) and/or in the case of an expected discontinuity in the development of the gradient (G) and an observed continuous development of the gradient (G), an additional procedure of actuating the actuator (7) is performed.

**5.** Method according to any one of the preceding claims, **characterized in that**

a) in the case of an expected continuous development and an observed discontinuity in the development of the gradient (G) a reversing procedure of actuating the actuator (7) is performed, and/or in that
b) in the case of an expected discontinuity in the development and an observed continuous development of the gradient (G), a procedure of actuating the actuator (7) back into the original actuating procedure is performed.

**6.** Method according to any one of the preceding claims, **characterized in that** the electric motor (7) is operated in a braking operation after the actuating procedure is terminated, wherein in the braking operation preferably two switching elements (HS1, HS2, LS1, LS2) of a same side of two sides (HS, LS) of a four-quadrant chopper (12) are closed and two switching elements (HS1, HS2, LS1, LS2) of the other side of the two sides (LS, HS) of the four-quadrant chopper (12) are open.

**7.** Control device for a braking mechanism (1), **characterized in that** the control device is configured so as to implement a method according to any one of Claims 1 to 6.

**8.** Braking mechanism (1) for a vehicle, said braking mechanism having an actuator (7) that comprises an electric motor (8), **characterized by** a control device that is configured so as to implement a method according to any one of Claims 1 to 6, or by a control device according to Claim 7.

**9.** Braking mechanism (1) according to Claim 8, **characterized in that** at least one current measuring device (14, 14') is allocated to the electric motor (8) and said current measuring device is arranged electrically between a switching element (HS1, HS2, LS1, LS2) of a four-quadrant chopper (12) and a motor connector (13, 13') of the four-quadrant chopper (12) for the electric motor (8).

**10.** Vehicle having a braking mechanism (1) according to any one of Claims 8 and 9.

**Revendications**

**1.** Procédé pour faire fonctionner un dispositif de freinage (1), dans lequel

- un actionneur (7) qui comporte un moteur électrique (8) est commandé en vue de déplacer un élément actionneur (10) dans une position prédéfinie, dans lequel
- au moins une grandeur de fin de rotation du moteur est détectée après la fin de la commande de l'actionneur (7), dans lequel
- la grandeur détectée de fin de rotation du moteur sert à contrôler si l'élément actionneur (10) s'est déplacé dans la position prédéfinie.

**2.** Procédé selon la revendication 1, **caractérisé en ce que** la commande de l'actionneur (7) est interrompue en fonction d'un paramètre.

**3.** Procédé selon l'une des revendications précédentes, **caractérisé en ce qu'**une vitesse angulaire du moteur électrique (8), une tension de moteur du moteur électrique (8) et/ou un courant de moteur passant à travers le moteur électrique (8) sont détectés en tant que grandeur de fin de rotation du moteur.

**4.** Procédé selon l'une des revendications précédentes, **caractérisé en ce qu'**une évolution temporelle d'un gradient (G) de la grandeur de fin de rotation du moteur est évaluée, dans lequel, de préférence,

a) un jeu de l'élément actionneur (10) est détecté lorsqu'une évolution régulière du gradient (G) est observée, et/ou
b) une variation de charge de l'actionneur (7) est détectée lorsqu'une évolution irrégulière du gradient (G) est observée, et/ou
c) une commande supplémentaire de l'actionneur (7) est effectuée lorsqu'une évolution régulière du gradient (G) est prévue et qu'une évolution irrégulière du gradient (G) est observée et/ou lorsqu'une évolution irrégulière du gradient (G) est prévue et qu'une évolution régulière du gradient (G) est observée.

**5.** Procédé selon l'une des revendications précédentes, **caractérisé**

a) **en ce qu'**une commande d'inversion de l'actionneur (7) est effectuée lorsqu'une évolution régulière du gradient (G) est prévue et qu'une évolution irrégulière est observée, et/ou
b) **en ce qu'**une commande de l'actionneur (7) est effectuée dans le même sens que la commande initiale lorsqu'une évolution irrégulière du gradient (G) est prévue et qu'une évolution régulière est observée.

**6.** Procédé selon l'une des revendications précédentes, **caractérisé en ce que** le moteur électrique (7) est mis en œuvre dans un mode de freinage après la fin de la commande, dans lequel, dans le mode de freinage, préférablement, deux éléments de commutation (HS1, HS2, LS1, LS2) sont fermés d'un même côté, parmi deux côtés (HS, LS) d'un élément de réglage à quatre quadrants (12), et deux éléments de commutation (HS1, HS2, LS1, LS2) sont ouverts de l'autre côté, parmi les deux côtés (LS, HS) de l'élément de réglage à quatre quadrants (12).

7. Dispositif de commande destiné à un dispositif de freinage (1), **caractérisé en ce que** le dispositif de commande est conçu pour mettre en œuvre un procédé selon l'une des revendications 1 à 6.

8. Dispositif de freinage (1) destiné à un véhicule, comprenant un actionneur (7) qui comporte un moteur électrique (8), **caractérisé par** un dispositif de commande qui est conçu pour mettre en œuvre un procédé selon l'une des revendications 1 à 6, ou par un dispositif de commande selon la revendication 7.

9. Dispositif de freinage (1) selon la revendication 8, **caractérisé en ce qu'**au moins un dispositif de mesure de courant (14, 14') est associé au moteur électrique (8), lequel dispositif de mesure de courant est disposé électriquement entre un élément de commutation (HS1, HS2, LS1, LS2) d'un élément de commande à quatre quadrants (12) et une borne moteur (13, 13') de l'élément de commande à quatre quadrants (12), pour le moteur électrique (8).

10. Véhicule comprenant un dispositif de freinage (1) selon l'une des revendications 8 et 9.

Fig. 1

Fig. 2

Fig. 3

Fig. 4

Fig. 5

**IN DER BESCHREIBUNG AUFGEFÜHRTE DOKUMENTE**

**In der Beschreibung aufgeführte Patentdokumente**

- DE 102012205576 A1
- DE 102006052810 A1